# EUROPEAN PATENT APPLICATION

(11) **EP 4 497 548 A1**
(43) Date of publication of application: **29.01.2025**
(21) Application number: 24190502.5
(22) Date of filing: 24.07.2024
(51) Int. Cl.: B25J 9/10, B25J 13/08, B25J 17/02, B25J 19/00, B25J 15/00, B25J 11/00

(54) **ROTARY INTERFACE FOR AUTOMATED EQUIPMENT**

(30) Priority: 24.07.2023 US 202363528571 P
(71) Applicant: Pushcorp Inc., Garland, TX 75041 (US)
(72) Inventor: Erlbacher III, Edwin Alvin, Garland, TX (US); Kleppe, Kevin Philip, Garland, TX (US); Flora, Isaiah Jon, Garland, TX (US); Falcone, Maximiliano A, Garland, TX (US); McMillen, Michael Rodney JR, Garland, TX (US); Nader, Leith Nicholas, Garland, TX (US); Godwin, Lester Earl IV, Garland, TX (US)
(74) Representative: Barker Brettell Sweden AB

(57) **Abstract**

A rotary interface for automated equipment is designed to leverage the rotational motion of a mechanical manipulator to cause rotation between a top section and a bottom section of the rotary interface, thereby rotating a first portion of an end of arm tooling (EOAT) with respect to a second portion of the EOAT. This ability to reorient the EOAT increases the functionality of the EOAT and avoids having to replace the EOAT to perform the additional functions.

## Description

### TECHNICAL FIELD

The present disclosure relates to a rotary interface for automated equipment that enables relative rotation of components within end of arm tooling (EOAT) that is coupled to a mechanical manipulator.

### SUMMARY

A rotary interface of the present disclosure includes a top section and a bottom section rotationally coupled together. A locking assembly between the top section and the bottom section selectively enables or prevents rotation therebetween.

The rotary interface of the present disclosure may be integrated into end of arm tooling (EOAT) to provide selective rotation between a first portion of the EOAT that is coupled between the bottom section of the rotary interface and a mechanical manipulator and a second portion of the EOAT that is coupled to the top section of the rotary interface.

The rotary interface of the present disclosure does not include an integrated actuation mechanism. Instead, the rotary interface of the present disclosure leverages the rotational motion of the mechanical manipulator to cause rotation between the top section and the bottom section of the rotary interface, thereby rotating the first portion of the EOAT with respect to the second portion of the EOAT. This ability to reorient the EOAT increases the functionality of the EOAT and avoids having to replace the EOAT to perform the additional functions.

The details of one or more implementations of the systems and methods of the present disclosure are set forth in the accompanying drawings and the description below. Other features, objects, and advantages of the implementations will be apparent from the description and drawings.

### BRIEF DESCRIPTION OF THE DRAWINGS

For a more complete understanding of this disclosure and its features, reference is now made to the following description, taken in conjunction with the accompanying drawings, in which:
FIG. 1 is a perspective end view of an implementation of a representative end of arm tooling (EOAT) comprising a rotary interface, according to the present disclosure.
FIG. 2 is a perspective side view of another implementation of the EOAT of FIG. 1 after the EOAT has been reoriented, according to the present disclosure.
FIG. 3 is an exploded side view depicting an implementation of the components for coupling a mechanical manipulator to an EOAT comprising a rotary interface, according to the present disclosure.
FIG. 4 is a top internal view of a bottom section of an implementation of a rotary interface, according to the present disclosure.
FIG. 5 is an enlarged view of an internal locking assembly disposed within the bottom section of the rotary interface of FIG. 4, according to the present disclosure.
FIG. 6 is a side view of an implementation of a rotary interface depicting positional and status indicators, according to the present disclosure.
FIG. 7 depicts a schematic view of the external rotation of the rotary interface, both separately and integrated within a representative EOAT, according to the present disclosure.
FIG. 8 is a perspective side view showing an implementation of the components that set rotational limits of a rotary interface, according to the present disclosure.
FIG. 9 depicts a side cross-sectional view of an implementation of locking assembly components of a rotary interface, according to the present disclosure.

Like reference symbols in the various drawings indicate like elements.

### DETAILED DESCRIPTION

The present disclosure relates to a rotary interface for automated equipment that enables relative rotation of components within end of arm tooling (EOAT) that is coupled to a mechanical manipulator. In some implementations, the mechanical manipulator may comprise an industrial robot, an industrial gantry, or any other equipment operable to rotate the EOAT at least 90 degrees.

In some implementations, the rotary interface of the present disclosure includes a top section and a bottom section rotationally coupled together. A locking assembly between the top section and the bottom section selectively enables or prevents rotation therebetween.

The rotary interface of the present disclosure may be integrated into end of arm tooling (EOAT) to provide selective rotation between a first portion of the EOAT that is coupled between the bottom section of the rotary interface and a mechanical manipulator and a second portion of the EOAT that is coupled to the top section of the rotary interface.

The rotary interface of the present disclosure does not include an integrated actuation mechanism. Instead, the rotary interface of the present disclosure leverages the rotational motion of the mechanical manipulator to cause rotation between the top section and the bottom section of the rotary interface, thereby rotating the first portion of the EOAT with respect to the second portion of the EOAT. This ability to reorient the EOAT increases the functionality of the EOAT and avoids having to replace the EOAT to perform the additional functions.

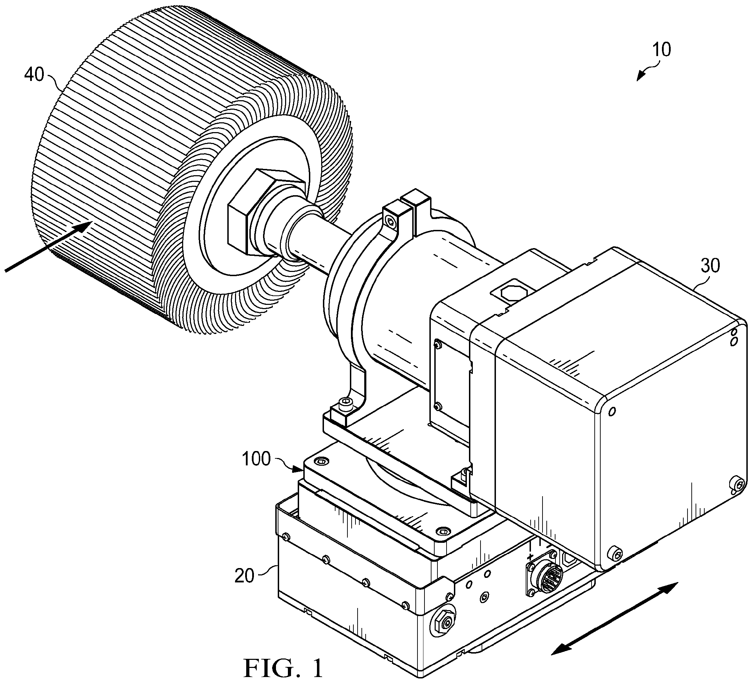

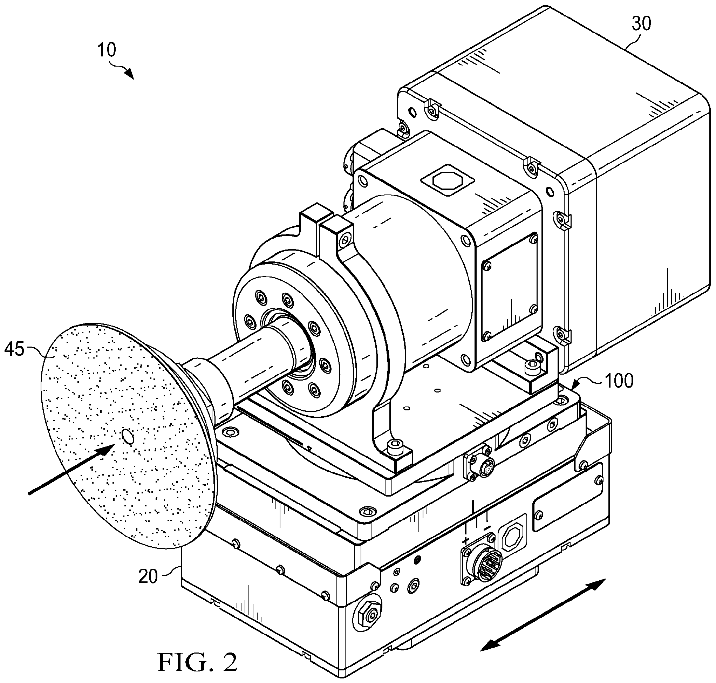

FIG. 1 and FIG. 2 depict a representative EOAT 10 positioned in a radial orientation and in an axial orientation, respectively. A rotary interface 100 of the present disclosure is shown coupled between a first portion 20 of the EOAT 10 and a second portion 30 of the EOAT 10.

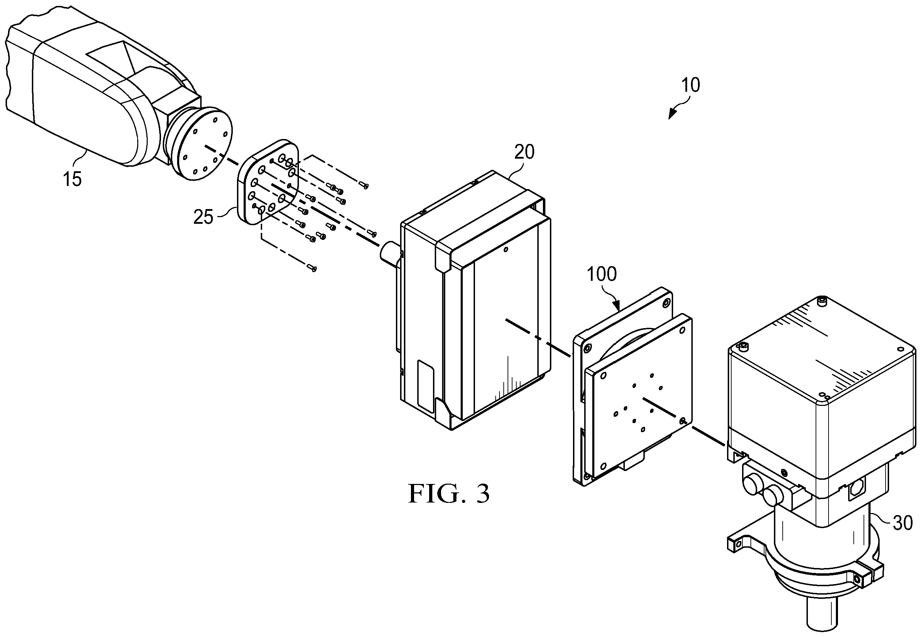

FIG. 3 depicts an exploded view showing a mechanical manipulator 15 and components that connect it to the EOAT 10. In more detail, the EOAT 10 may be coupled to a mechanical manipulator 15, such as a robot, via a robot adaptor plate 25 that couples to the first portion 20 on the side opposite the rotary interface 100. In some implementations, the mechanical manipulator is an industrial robot arm, and the first portion 20 of the EOAT 10 couples to a rotational joint of the industrial robot arm.

The first portion 20 of the EOAT 10 may comprise a force compliance device that applies force to the second portion 30 of the EOAT 10 in the direction shown by the arrows. In FIG. 1 the force is applied radially, and in FIG. 2 the force is applied axially.

The second portion 30 of the EOAT 10 may comprise a servo spindle. In FIG. 1, the servo spindle 30 is shown mounted radially, and a radial abrasive component 40 may be coupled to the end of the servo spindle 30 in this orientation. In FIG. 2, the servo spindle 30 is shown mounted axially, and an axial abrasive component 45 may be coupled to the end of the servo spindle 30 in this orientation. In various implementations, the EOAT 10 of FIG. 1 and FIG. 2 may be used for sanding, grinding, and polishing operations, for example.

The rotary interface 100 of the present disclosure enables the EOAT 10 to be reconfigured between the FIG. 1 orientation where radial forces are applied and the FIG. 2 orientation where axial forces are applied, all in a single setup. This reorientation can take place any time during operation of the EOAT 10 simply by unlocking the rotary interface 100, then rotating the mechanical manipulator to thereby cause rotation between the top and bottom sections of the rotary interface 100. Thus, instead of having an integrated actuation mechanism, the rotary interface 100 actuates (rotates) by leveraging the rotational motion of the mechanical manipulator to thereby rotate the servo spindle 30 relative to the force compliance device 20, or vice versa. This ability to reorient the EOAT eliminates the need for costly and complex hardware to change out the EOAT or to provide an entirely new robotic system.

### Rotary Interface:

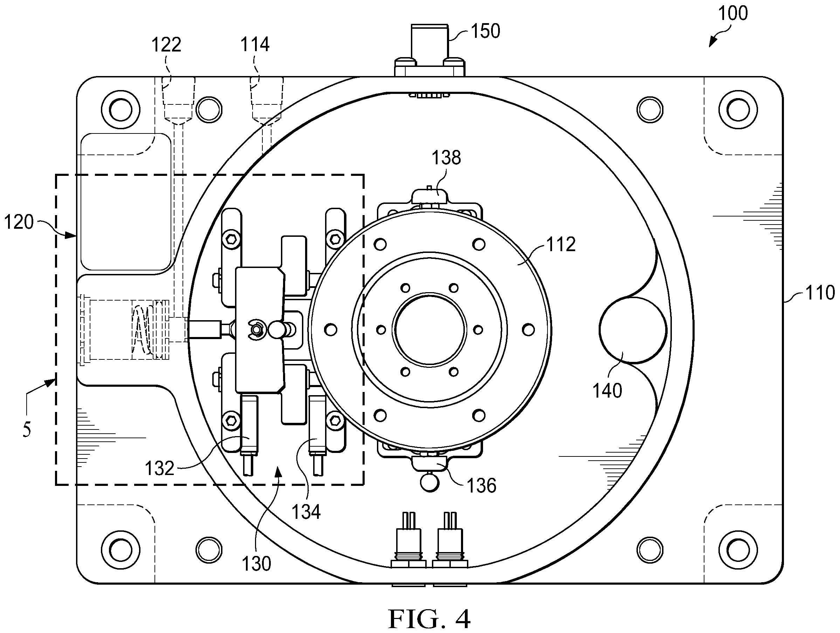

Various views of an implementation of the rotary interface 100 of the present disclosure are depicted in FIG. 4 through FIG. 9. FIG. 4 is a top internal view of a bottom section 110 of the rotary interface 100. As shown, the bottom section 110 houses a locking assembly 120 that receives air through a supply port 122. The bottom section 110 also houses one or more sensors 130, which may include an unlock sensor 132, a lock sensor 134, an axial position sensor 136, and a radial position sensor 138. A supply power and digital IO port 150 receives one or more cables to supply 24-volt power to the sensors 130, and to send status signals from the sensors 130 to a programmable logic controller (PLC) or to a robot controller. The bottom section 110 further houses a cross roller bearing 112 that facilitates, and a rubber bumper 140 that limits, rotational movement between the top section 105 and the bottom section 110 of the rotary interface 100. A purge port 114 receives air to provide positive pressure that keeps particulates (that might result from sanding, grinding and polishing operations) out of the rotary interface 100 interior.

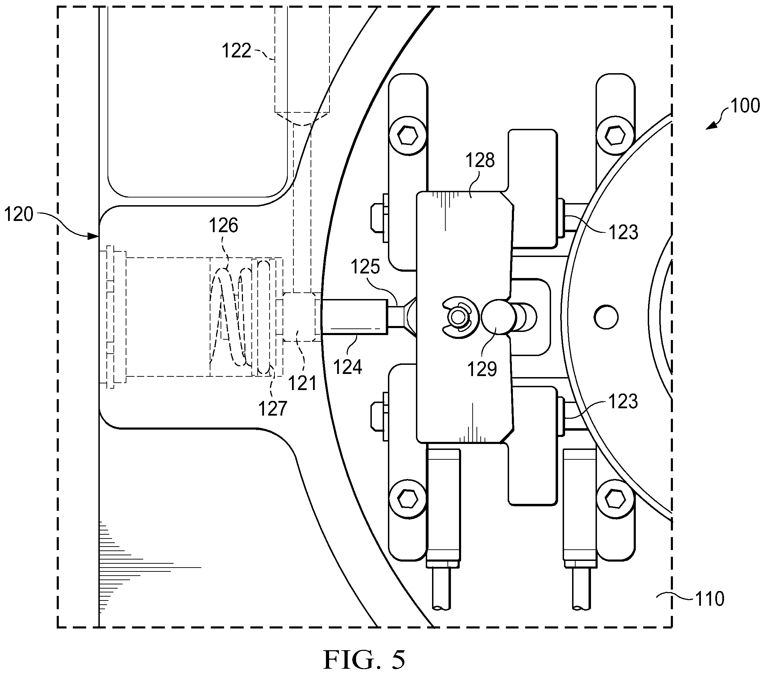

FIG. 5 is an enlarged view of the internal locking assembly 120 disposed with the bottom section 110 of the rotary interface 100 shown in FIG. 4. As shown, the locking assembly 120 comprises a spring 126 that exerts force against a piston shaft 124 that exerts force against a locking mechanism 128 to retain a locking pin 129 when the rotary interface 100 is locked. To unlock the rotary interface 100, air is supplied through supply port 122, which actuates a pneumatic cylinder to overcome the spring-loaded piston 124 and retract the locking mechanism 128 away from the locking pin 129, thereby allowing for rotation. FIG. 5 also depicts an O-ring 127 that seals the spring 126 chamber, a rod eye 125 that includes a swivel end to accommodate misalignment between the piston shaft 124 and the locking mechanism 128 as these components articulate, and dry running DU bearings 121, 123 comprising dry lubricated surfaces that reduce friction for linear motion of the piston shaft 124 and the locking mechanism 128, respectively.

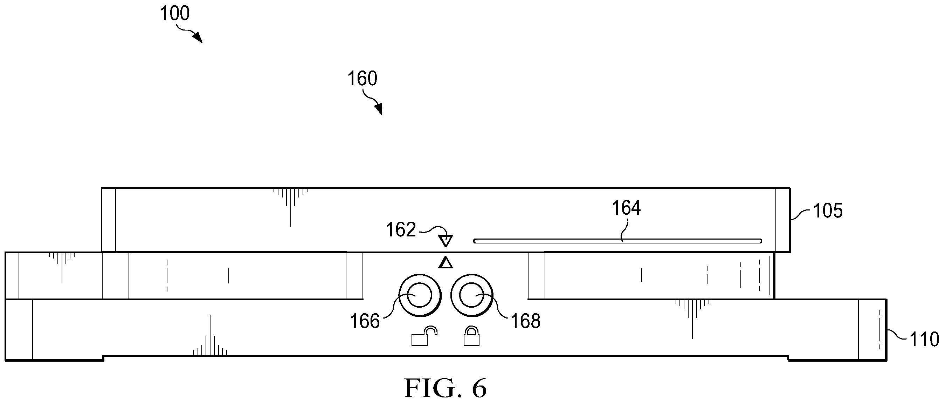

FIG. 6 is a side view showing the top section 105 and bottom section 110 of the rotary interface 100. The rotary interface 100 comprises one or more visual indicators 160, which may include a position indicator 162, a directional indicator 164, an Unlock LED indicator 166, and a Lock LED indicator 168. The externally mounted LEDs 166, 168 allow a user to visually verify whether the rotary interface 100 is locked or unlocked from a distance. These indicators 160 further provide industrial standard digital outputs to verify the locking and positional status to the PLC controller or robotic controller.

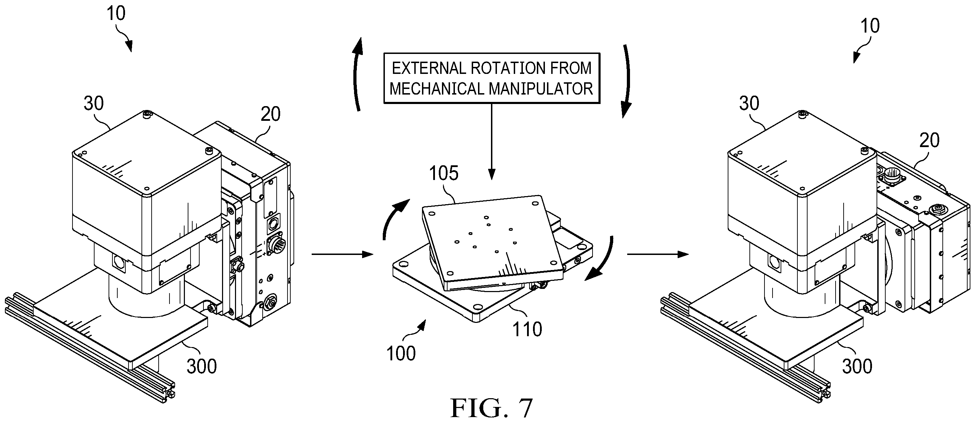

FIG. 7 schematically depicts how the rotary interface 100 is rotated to reorient the EOAT 10. As schematically shown in the image on the left, with the rotary interface 100 unlocked, a tool fork 300 is used to engage the second portion 30 of the EOAT 10 to keep it static and prevent it from rotating, while the mechanical manipulator, which is coupled to the first portion 20 of the EOAT 10, is rotated 90 degrees. As schematically shown in the image in the middle, rotation of the mechanical manipulator by 90 degrees causes the bottom section 110 of the rotary interface 100, which is coupled to the first portion 20 of the EOAT 10, to rotate by 90 degrees with respect to the top section 105 of the rotary interface 100, which is coupled to the second portion 30 of the EOAT 10 held static by the tool fork 300. The image on the right shows the EOAT 10 in the reoriented configuration. The rotary interface 100 may be locked again once the EOAT 10 has been reoriented.

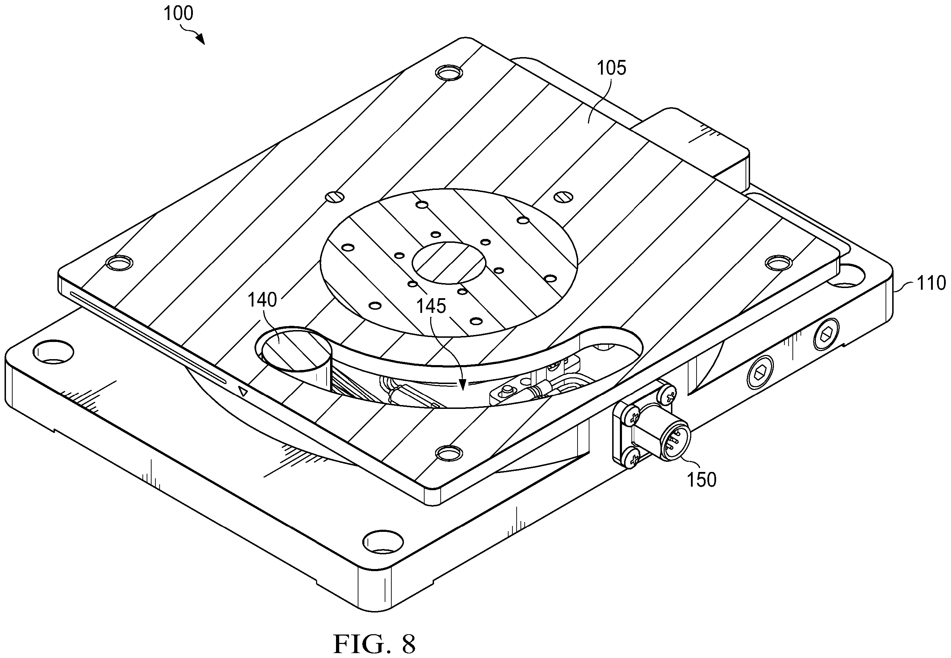

FIG. 8 is a perspective side view showing the components that set rotational limits between the top section 105 and bottom section 110 of the rotary interface 100. As depicted, the rubber bumper 140 housed in the bottom section 110 extends into an arcuate slot in the upper section 105, and the rubber bumper 140 acts as a hard stop to limit the rotary motion to approximately 90 degrees, plus or minus about 3 degrees.

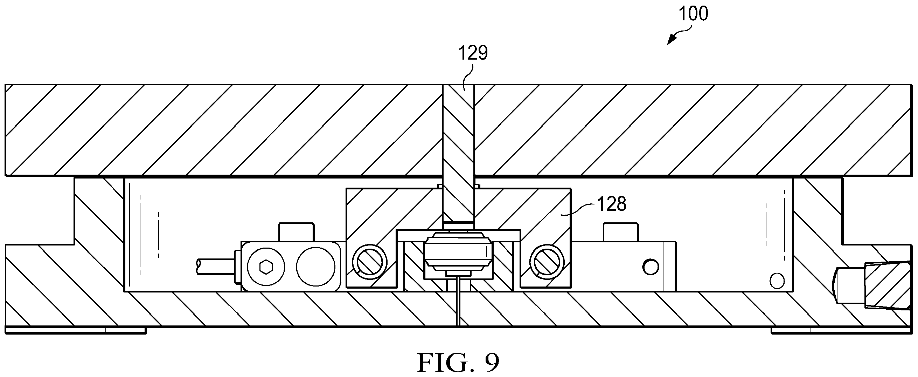

FIG. 9 depicts a side cross-sectional view of the locking mechanism 128 and locking pin 129 components of the locking assembly 120 of the rotary interface 100. In some implementations, the locking mechanism 128 is a stainless steel component that includes a slot having a nominal width of 5 millimeters to receive the locking pin 129. The locking pin 129 may be a stainless steel dowel pin having a nominal width of 5 millimeters to engage the slot in the locking mechanism 128. Because the locking pin travels on an arc in the arcuate slot 145 shown in FIG. 8, and because the locking mechanism 128 travels linearly in response to the spring-loaded piston 124 best seen in FIG. 5, the locking mechanism 128 will engage with the locking pin 129 and provide a tight fit with little vibration, despite tolerance stackup due to machined components.

### Operational Summary:

In operation, and referring to FIG. 3, a mechanical manipulator 15 (such as a robot) is coupled to the first portion 20 (such as a force compliant device) of the EOAT 10, which is coupled to the bottom section 110 of the rotary interface 100, and the top section 105 of the rotary interface 100 is coupled to the second portion 30 (such as a servo spindle) of the EOAT 10. The rotary interface 100 should be in the locked position during these coupling steps.

Referring to FIG. 7, the mechanical manipulator 15 is then used to engage the servo spindle 30 against the tool fork 300 and position its axis of rotation inline with that of the rotary interface 100.

Referring to FIG. 5, air is then supplied through supply port 122, which actuates a pneumatic cylinder to overcome the spring 126 exerting force on the piston shaft 124 and retract the locking mechanism 128 away from the locking pin 129, thus unlocking the rotary interface 100.

Referring to FIG. 6, to confirm that the unlock step was successful, a user may view the Unlock LED indicator 166 to verify that it is illuminated and/or the PLC or robot controller should receive a signal from the unlock sensor 132 shown in FIG. 4.

Once the unlock step is verified, referring to FIG. 7, the mechanical manipulator 15 rotates 90 degrees, which in turn rotates the bottom section 110 of the rotary interface 100 with respect to the top section 105 of the rotary interface 100. This motion thereby rotates the force compliance device 20 from the position shown in the left image to the position shown in the right image of FIG. 7, while the tool fork 300 maintains the servo spindle 30 in a static position. Referring to FIG. 6, the indicators 160 are used to provide the proper direction of rotation to the mechanical manipulator 15 and also to provide the location of the 90-degree indexed position. Referring to FIG. 8, as the rotation occurs, the integrated rubber bumper 140 acts as a hard stop to the locking pin 129 to limit rotary motion between the top and bottom sections 105, 110 of the rotary interface 100 to approximately 90 degrees, plus or minus 3 degrees.

Referring to FIG. 6, once the external position indicator 162 is aligned, a positional output sensor, such as axial position sensor 136 or radial position sensor 138 shown in FIG. 4, sends a signal to verify the successful rotation.

Referring to FIG. 5, supply air is then removed from the supply port 122, which allows the spring 126 to exert a force on the piston shaft 124, which exerts a force on the locking mechanism 128 to reengage with the locking pin 129 via the slot in the locking mechanism 128.

Referring to FIG. 6, to confirm that the lock step was successful, a user may view the Lock LED indicator 168 to verify that it is illuminated and/or the PLC or robot controller should receive a signal from the lock sensor 134 shown in FIG. 4.

Referring to FIG. 7, the mechanical manipulator 15 then disengages the EOAT 10 from the tool fork 300, and the EOAT 10 in its reoriented configuration may then be used to perform the next process.

It is to be understood the implementations are not limited to particular systems or processes described which may, of course, vary. It is also to be understood that the terminology used herein is for the purpose of describing particular implementations only, and is not intended to be limiting. As used in this specification, the singular forms "a", "an" and "the" include plural referents unless the content clearly indicates otherwise. As another example, "coupling" includes direct and/or indirect coupling of members.

Although the present disclosure has been described in detail, it should be understood that various changes, substitutions and alterations may be made herein. The scope of the present application is not intended to be limited to the particular embodiments of the process, machine, manufacture, composition of matter, means, methods and steps described in the specification. As one of ordinary skill in the art will readily appreciate from the disclosure, processes, machines, manufacture, compositions of matter, means, methods, or steps, presently existing or later to be developed that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps.

## Claims

1. A rotary interface, comprising means for enabling relative rotation between a first portion and a second portion of an end of arm tooling (EOAT) coupled to a mechanical manipulator.

2. The rotary interface of claim 1, wherein the means for enabling relative rotation is coupled between the first portion and the second portion of the EOAT.

3. The rotary interface of claim 1 or 2, further comprising means for limiting the degree of relative rotation between the first portion and the second portion of the EOAT.

4. The rotary interface of any one of claims 1-3, further comprising a locking assembly for selectively allowing and preventing relative rotation between the first portion and the second portion of the EOAT, wherein the locking assembly is optionally pneumatically actuated.

5. The rotary interface of claim 4, further comprising:
a lock sensor, and optionally also a first visual indicator that reflects when the locking assembly is locked based on output from the lock sensor; and
an unlock sensor, and optionally also a second visual indicator that reflects when the locking assembly is unlocked based on output from the unlock sensor.

6. The rotary interface of any one of claims 1-5, further comprising:
an axial position sensor; and
a radial position sensor.

7. The rotary interface of claim 6, further comprising:
a third visual indicator that reflects a positional status of the rotary interface based on output from the axial position sensor; and
a fourth visual indicator that reflects a directional status of the rotary interface based on output from the radial position sensor.

8. A system comprising the rotary interface of any one of claims 1-7, further comprising the EOAT.

9. The system of claim 8, wherein rotation of the mechanical manipulator causes the relative rotation between the first portion and the second portion of the EOAT.

10. The system of claim 8 or 9, wherein the first portion of the EOAT is coupled to the mechanical manipulator.

11. The system of claim 10, wherein the first portion of the EOAT is a force compliance device that applies force to the second portion of the EOAT, and the second portion of the EOAT is optionally a servo spindle comprising an abrasive component.

12. The system of claim 11, wherein the means for enabling relative rotation enables the EOAT to be reconfigured between an orientation where radial forces are applied and an orientation where axial forces are applied.

13. A method of operating the system of any one of claims 8-12, comprising rotating the first portion with respect to the second portion of the EOAT by rotating the mechanical manipulator.

14. A method of operating the system of any one of claims 8-12, where the system comprises a locking assembly for selectively allowing and preventing relative rotation between the first portion and the second portion of the EOAT, the method comprising:
unlocking the locking assembly;
rotating the first portion with respect to the second portion of the EOAT by rotating the mechanical manipulator; and
locking the locking assembly.

15. The method of claim 13 or 14, further comprising restraining the second portion of the EOAT before the rotating step.
